# EUROPEAN PATENT SPECIFICATION

(11) **EP 3 784 023 B1**
(45) Date of publication and mention of the grant of the patent: **02.07.2025**
(21) Application number: 19745739.3
(22) Date of filing: 24.04.2019
(51) Int. Cl.: A01G 9/00

(54) **FLORAL ARCHITECTURE**
FLORALE ARCHITEKTUR
ARCHITECTURE FLORALE

(30) Priority: 25.04.2018 HR 20180661
(43) Date of publication of application: 03.03.2021
(73) Proprietor: Kunovic, Mirjana, 10090 Zagreb (HR)
(72) Inventor: Kunovic, Mirjana, 10090 Zagreb (HR)
(86) International application number: PCT/HR2019/000009
(87) International publication number: WO 2019/207327

(56) References cited:
- AU-B1- 2016 208 325
- FR-A1- 2 935 596

## Description

### The field of the invention

This invention refers to modular flowerpot holders which incorporate controlled irrigation systems, which can be standalone installations, but also an integral part of the exterior or interior architecture.

### Technical problem

Since people began to live in urban areas, they wanted to bring the beauty of nature, especially flowers, in their homes. For centuries we planted them in various types of pots, planters and similar. Since every plant or flower needs specific conditions to be fulfilled for their growth and development, so they require conditions similar to their natural habitats, whereas urban spaces, with their architecture and space dimensions, require flexible, modular, foldable and customizable solutions for each space. Some of these requirements can be achieved with the help of technological solutions which I designed to satisfy people's desires, plants' needs, and integration into space and architecture. It is well-known that in existing urban areas there is a chronic lack of space, and because of the excessive construction the space for growing plants is particularly disadvantageous, especially in the summer months due to overheating, while simultaneously there is a great need for small green oasis in the squares, in residential and business spaces. For years, citizens were looking for the most affordable solutions for urban gardening in their small gardens and on the terraces.

The technical problem this invention is solving consists of:
Meeting the needs of urban spaces:
   - the flexibility of the construction enables easy fitting in any given space,
   - modular stacking allows a variety of combinations,
   - mobility, simple folding allows quick assembly and disassembly, if needed,
   - structure that is easily implemented in a variety of design solutions that fit into the given space
   - functionally such systems can be partitions, fences, standalone floral installations or an integral part of the exterior and interior architecture
Meeting the needs of plant species growing in pots inside urban areas:
   - soil moisture (achieved by controlled watering)
   - water quality (achieved by filter installation)
   - water temperature (ideal water temperature for watering plants is the temperature as close to the soil temperature, which can be achieved by installing flexible tanks)
   - soil replenishment
   - protection of soil from freezing or overheating
   - protection of plants from diseases and pests
   - collecting the necessary data (e.g. temperature, soil moisture, rainfall, windiness)
Need to install additional equipment:
   - seating area
   - advertising space
   - built-in lighting
   - water fountains
   - solar power (if we cannot connect to the electrical power source)
   - space for traffic signalling (e.g. at roundabouts)
Satisfying the needs of users:
   - easy maintenance (timesaving)
   - easy management, quick access to data and information about required actions using mobile applications (tank filling, plant protection, soil replenishment)

### The state of the art

The current state of planting and flowering in urban areas is boiling down to various flowerpots at the bottom of which is a watering mat from which the plant draws the water with its roots. These kinds of solutions require frequent watering during the summer months, daily and even several times, which is time-consuming and requires a lot of effort and constant care.

Document AU 2016208325 B describes a modular vertical garden system that can be in kit form.

Thus, the complete combined solution as the one I offer in the disclosure of the essence of the invention is not known to me.

### Disclosure of the essence of the invention

The primary objective of this invention is to create the most ideal conditions for plant growing using technical solutions with the most rational utilization of space, water and sunlight as sources of energy, creative fitting into given spaces, achieving the simple system management to save time previously needed for care and maintenance of plants in the pots.

### The list of used reference signs (with an explanation of the functional advantages)

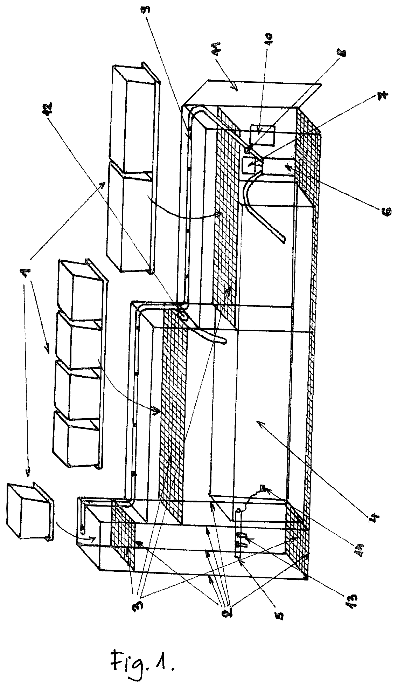

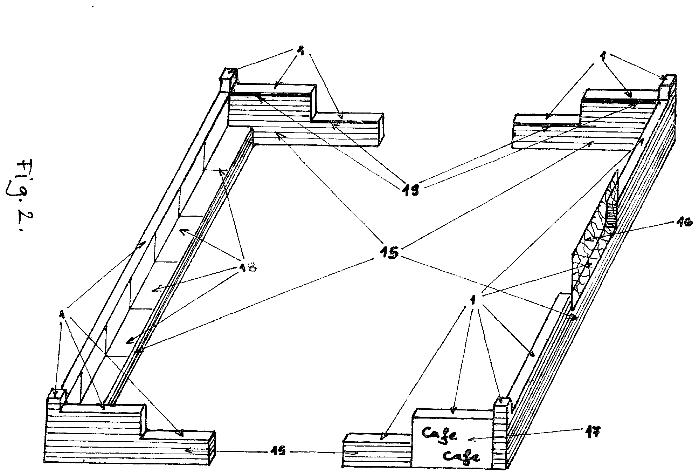

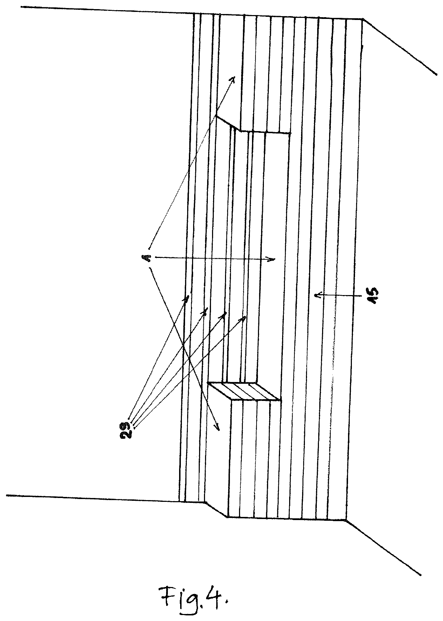

**1. plant growing pots with mats**
2. **a supporting structure** (using machine constructions, the aim is to create simple, stable structures flexible in height and width so that they can fit into various types of space (tailor made), the goal is to produce various types of ready-to-use modules that can be combined to provide various installations with a practical purpose so they can be used as fences, partitions, on roundabouts or as floral installations for exterior (outdoor) and interior (indoor) spaces where seating areas, storage spaces, etc. are installed, as shown in the accompanying drawings)
3. **a mesh** (which serves as a holder of flowerpots and can be lifted and lowered depending on the height of flowerpots on it)
4. **a flexible water tank** enables us maximum usability of space, the possibility of connecting multiple containers according to the principle of communicating vessels, which increases the volume and ensures that we always have enough water of ideal temperature for watering the plants (ideal temperature is the air or soil temperature),
5. **connection to the water supply system** if we have access to the running water
**6. water pump 7. time switch (timer) 8. plug and socket for power supply**
9. **irrigation system** (e.g. capillary, drop by drop, or similar)
10. **a computer** to manage the complete system, collect data and wirelessly connect to other computers or advanced mobile phones and thus provide access to data, data transfer, and change of computer management commands. It is used in complex systems and replaces time switches.
11. **a door** enables easier access to the instruments
12. **a filling hole** when there is no possibility of connecting to the water supply network it allows for easy filling
13. **a water purifier** for achieving the water quality that is the best for the plants we are growing
14. **an automatic tank filling system**
15. **external masks or wall covers** enabling us to choose the exterior design for each of the products for the existing or default architecture, (e.g. exterior elements for ventilation façades)
16. **a pergola** (support brackets for climbing plants)
**17. advertising space 18. seating area 19. lighting**
**19.a** lighting that has the function to illuminate plants with light that replaces lack of natural sunlight 20. **a solar power system** (solar panels, batteries)
**21. traffic signalling 22. water fountains 23. storage boxes**
24. **a drain** for excess water due to abundant precipitation (so that excess water does not damage the façade of the building)
25. **a fixing system for flowerpot stability** (so that stormy winds cannot throw out the flowerpots)
26. **a distribution box with a cover** (provides easy access to water supply and drainage gutters)
27. **water supply hose 28. drainage hose**
29. **a fence** in which the solution is integrated (shown in drawing no.1/10, drawing no.2/10 and drawing no.4/10.)
**30. distribution channels 31. divider 32. system for stretching the structure of the flowerpot holders on the windows**
33. **a window supporting structure for flowerpots** which is clipped to the window openings and is flexible in length
34. **clips** used to attach and detach the supporting structure no. 33

### DETAILED DESCRIPTION OF THE APPLICATION OF THE INVENTION

By combining components, we are creating solutions for the abovementioned problems and thus creating new products that we will best explain and show in the following drawings.

### Drawing no. 1/10

Drawing number 1/10 is showing a model from which it is apparent that the skeleton consists of a machine construction (2), meshes serving as supporting structures (3), flower pots (1), water tanks (4), connection to water supply (5), and, if possible, water filling holes (12), water purifiers (13), pump (6) by which the water is pumped into the irrigation system (9), sockets and plugs for electrical power connection (8), time switch - timer (7) or with advanced systems a computer (10) and a door (11).

By using machine construction, we achieve simple, stable structures where we can choose the height and the width and thus achieve great flexibility when the system must be integrated into the given space. Meshes have the possibility of lifting and lowering so they can adapt to flowerpot height which is placed on them. The water tank flexibly adapts to the space in which it is located by its volume and circumference. It has a built-in water supply and drain plug. Multiple tanks can be connected by means of a communicating vessels system to ensure the required amount of water for watering. When we have the possibility to connect to the water supply, filling is automatically switched on when the tank is drained and switched off when it is fully filled and if we do not have the possibility to connect to the water supply network a filling hole is installed. The pump is connected to the water tank and is powered with electric energy from the network (if possible) or from the solar system battery, and with the help of a time switch or a timer the time and length of watering through the irrigation system can be programmed. When we have the need for more complex systems the timer is replaced by a computer taking over the system management, collecting the necessary data and sending the information to the users.

### Drawing no. 2/10

Showing how by applying and combining components from drawing no.1/10 solutions in the given space of a cafe's terrace can be created. In such a combination, there is a pergola for climbing plants, diffuse lighting, seating area and advertising space, and the entire system is covered with wooden cladding for ventilated façades.

### Drawing no. 3/10

Showing a flower bench where by using and combining components from drawing no. 1/10 we get a product that satisfies more functions on one balcony, which are the sitting and plant growing space from which we can irrigate other flowerpots on the balcony. In the winter months, flowerpots can be stored in a storage container and by choosing from a variety of exterior mask designs we can fit it into the desired space.

### Drawing no. 4/10

Showing a balcony fencing that is an integrated part of the architecture and incorporates all the necessary components that provide the most favourable conditions for plant growing on the balconies which are also listed in the call signs.

### Drawing no. 5/10

Showing a flowerpot supporting structure for windows consisting of a flexible structure (33), which is stretchable in length (32) thus achieving greater adaptability to various window dimensions. It is fixed to the window opening using clips (34). Flower pot mat with a drain hole on the top (24) is connected to drain hose (28) achieving that excess rainfall water does not flow on the façade, from the distribution box (26) a draining hose (27) is connected to the irrigation system (9), fixing system (25) consisting of elastic strips and sliding wedges which are placed in the ground to fix the flower pots (1) to the structure using clips (34) which ensures that flower pots will not be thrown out of the structure during strong winds.

### Drawing no. 6/10

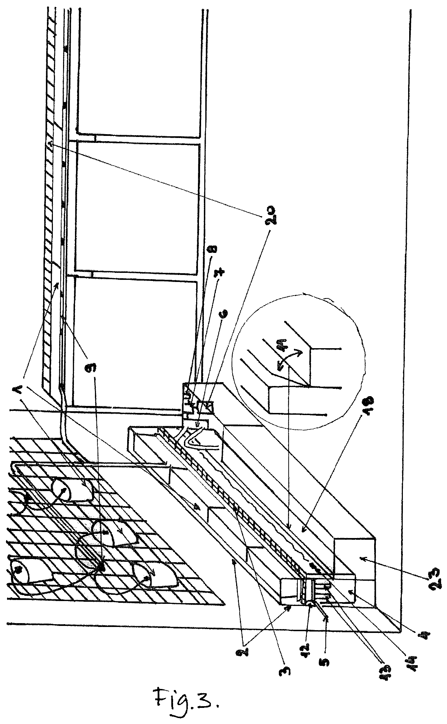

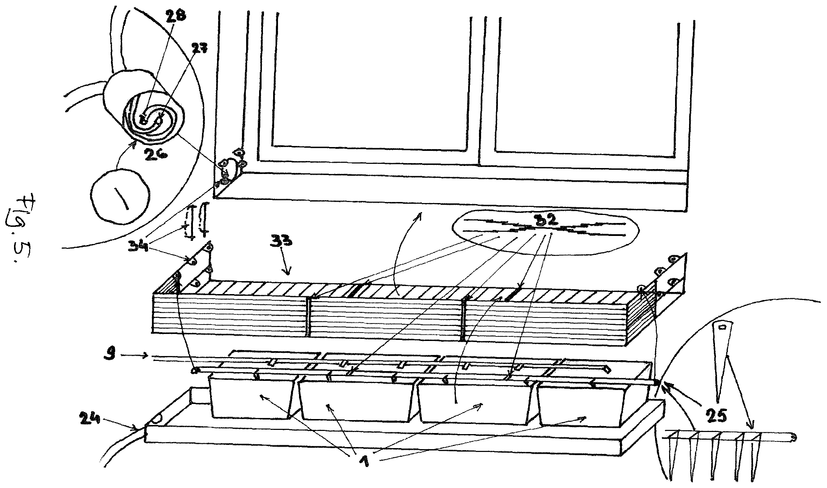

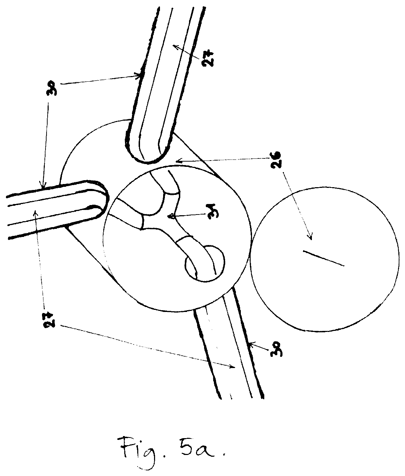

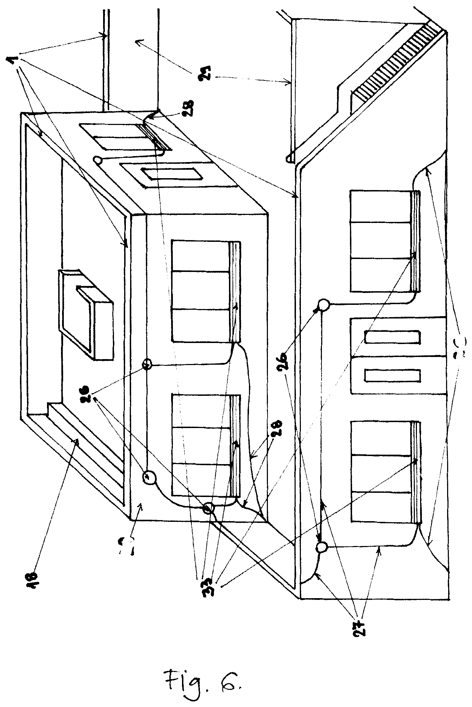

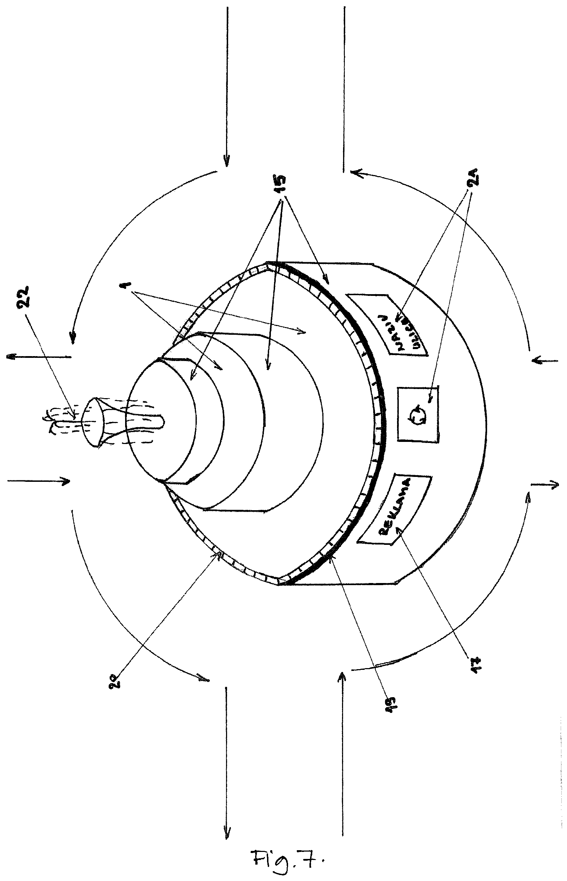

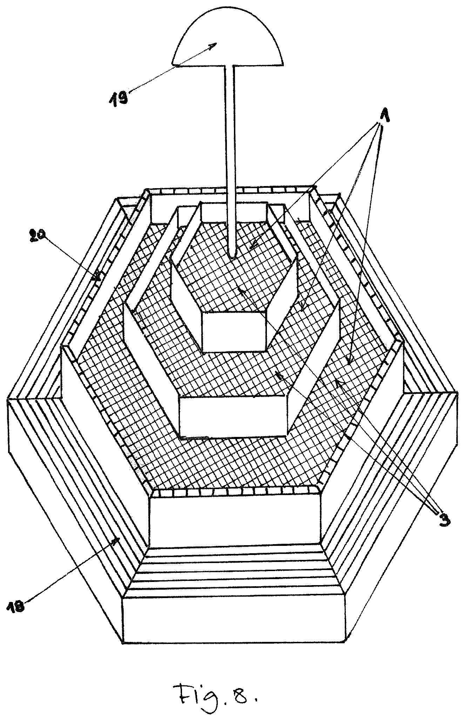

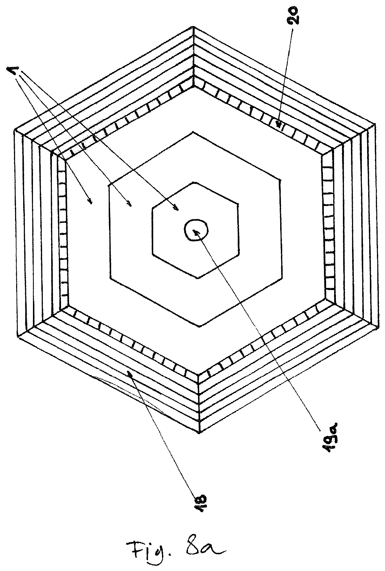

Showing a system integrated into the architecture of the residential property in a way that the complete solution shown in the drawings no. 1/10 and 3/10 is built-in on the terrace enclosed by structures serving as flowerpot holders, on the windows there are flowerpot holders shown in the drawing no. 5/10. Below the façade lining, a channel system is installed in the distribution boxes (26) as shown in the drawing no. 7/10, through which the water supply hoses pass through (27) as well as for water drainage (28). Such a system allows controlled watering during the vegetation cycle while with the arrival of winter and low temperatures the system is discharged so that there is no freezing, and the window holders are detached not to keep the snow.

### Drawing no. 8/10

Showing flower installation on a roundabout using a structure with all the necessary components installed as shown in the drawings no. 1/10 and 3/10 has a built-in solar power supply system, advertising space and signalling, lighting and a water fountain.

### Drawing no. 9/10 and 10/10

Showing a flower installation for exteriors and interiors, e.g. parks, squares, shopping malls or other spaces. It is made of components shown in the drawings no.1/10 and 3/10 which are built in an installation by combining components as shown in the drawing no. 9/10 to get an installation with seating space, power solar system, space for cascading flower pots and the lighting used in the exterior to illuminate space (19), while in the interior it compensates for the lack of natural light (19a) which plants need for growth and development. Drawing no. 10/10 is showing the layout of the drawing no. 9/10.

## Claims

1. Kit for creating floral architecture, **wherein said** floral architecture is the combination of components for designing various systems, installations in spaces and architecture, and said floral architecture is comprising:
pot with mats for plant growing (1), supporting structures for machines (2), meshes (3), flexible water tank (4), water pump (5), time switch - timer (7), a computer (10), plug (8), irrigation system (9), door (11), filling hole (12), water purifier (13), system for automatic water tank filling (14), exterior masks or wall claddings (15), pergola (16), advertising space (17), seating area (18), lighting (19) and (19a), solar power system (20), traffic signalling (21), water fountain (22), storage box (23), drainage of excess water (24), fixer for flower pots stability (25), distribution box with a cover (26), drainage water hose (27), water supply hose (28), fence (29), distribution channel (30), divider (31), stretching system (32), flexible supporting structure for flower pots (33).

2. Kit according to claim 1, **wherein** the components can easily and simply be combined, so that length, width and height fit into a defined space.

3. Kit according to claim 1, wherein components of the kit can be assembled and disassembled as needed.

4. Use of a kit according to claim 1 to create a floral installation.

5. Method of installing a floral architecture formed with the kit according to claim 1 in a building, comprising installing distribution channels (30), distribution boxes with covers (26), water drainage hoses (27), water supply hoses (28) and a special infrastructure underneath wall covers, while the remaining components of the floral architecture are installed in the most convenient place on or in the building, the window openings incorporate the parts of the clips which are then attached to the pot holder.

6. Kit according to claim 1,**wherein** the computer manages the watering system using program software and based on collected data such as soil moisture using a probe, automatic regulation of watering start according to plant needs, collects data on intensity of the sunlight, temperature to which plants are exposed in pre-set time period, wireless connecting system from the central computer enables management of the system and access to the collected data, in the event of vandalism, system failure, drop of water level below the programmed minimum, the system automatically sends notification alerts to the central computer.

## Patentansprüche

1. Blumenarchitektur, **wobei die genannte** Blumenarchitektur eine Kombination von Komponenten zur Gestaltung verschiedener Systeme, Rauminstallationen und Architektur ist und die genannte Blumenarchitektur aus Folgendem besteht:
Trog mit Matten zur Pflanzenzucht (1), Tragkonstruktion für Maschinen (2), Netze (3), flexibler Wassertank (4), Wasserpumpe (5), Zeitschalter - Zeitschaltuhr (7), ein Computer (8), Stecker (8), Bewässerungssystem (9), Tür (10), Einfüllöffnung (12), Wasseraufbereiter (13), automatisches Befüllsystem für die Wassertanks (14), Außenverkleidungen oder Wandverkleidungen (15), Pergola (16), Werbefläche (17), Sitzbereich (18), Beleuchtung (19) und (19a), Solaranlage (20), Verkehrssignalisierung (21), Wasserbrunnen (22), Aufbewahrungsbox (23), Drainage für überschüssiges Wasser (24), Befestigung zur Stabilität der Blumentröge (25), Verteilerbox mit Deckel (26), Drainage-Wasserschlauch (27), Versorgungswasserschlauch (28), Zaun (29), Verteilerkanal (30), Verteiler (31), Spannsystem (32), flexible Tragkonstruktion für die Blumentröge (33).

2. Blumenarchitektur gemäß Anspruch 1, **wobei** das Modulsystem die benötigten Komponenten einfach und leicht kombinieren kann, sodass Länge, Breite und Höhe an den vorgegebenen Raum angepasst werden.

3. Blumenarchitektur gemäß Anspruch 1, **wobei** sie einfach und leicht montiert und bei Bedarf in ihre Grundkomponenten zerlegt werden kann.

4. Blumenarchitektur gemäß Anspruch 1, **wobei** sie als florale Installation ausgeführt wird.

5. Blumenarchitektur gemäß Anspruch 1, **wobei** unter Verwendung der Komponenten verschiedene Lösungen erzielt werden können, abhängig von den Erfordernissen und Entwürfen der Architekten für die Gebäudeinterieurs und -exterieurs, indem Verteilerkanäle (30), Verteilerboxen mit Deckel (26), Drainage-Wasserschläuche (27), Versorgungswasserschläuche (28) installiert und eine eigene Infrastruktur unterhalb der Wanderverkleidungen angelegt werden, während die Kombination des erforderlichen Systems am geeignetsten Ort auf oder in dem Gebäude installiert wird und die Fensteröffnungen die Teile der Befestigungen enthalten, die dann am Troghalter befestigt werden.

6. Blumenarchitektur gemäß Anspruch 1, **wobei** der Computer das Bewässerungssystem mithilfe eines Software-Programms auf der Basis von erhobenen Daten wie der Bodenfeuchtigkeit in entnommenen Proben steuert, die automatische Bewässerung entsprechend dem Bedarf der Pflanzen startet und Daten über die Intensität der Sonneneinstrahlung und der Temperatur, der die Pflanzen in einem zuvor definierten Zeitraum ausgesetzt sind, sammelt. Ein drahtloses Verbindungssystem vom Zentralcomputer ermöglicht die Steuerung des Systems und den Zugriff auf die gesammelten Daten. Im Falle von Vandalismus, einer Systemstörung, einem Abfall des Wasserstands unter das programmierte Minimum sendet das System automatisch Warnmeldungen an den Zentralcomputer.

## Revendications

1. Architecture florale, **ladite** architecture florale étant une combinaison de composants pour concevoir divers systèmes, installations dans des espaces et architecture, et comprenant :
un pot avec nattes pour culture de plantes (1), des structures portantes pour machines (2), des grillages (3), un réservoir d'eau flexible (4), une pompe à eau (5), une minuterie (7), un ordinateur (10), un bouchon (8), un système d'irrigation (9), une porte (11), un trou de remplissage (12), un purificateur d'eau (13), un système de remplissage automatique du réservoir d'eau (14), des masques extérieurs ou revêtements muraux (15), une pergola (16), espace publicitaire (17), une zone d'assise (18), éclairage (19) et (19a), un système d'énergie solaire (20), signalisation routière (21), une fontaine (22), une boîte de stockage (23), évacuation de l'eau excédentaire (24), un fixateur pour stabilité des pots de fleurs (25), une boîte de distribution avec couvercle (26), un tuyau d'évacuation d'eau (27), un tuyau d'alimentation en eau (28), une clôture (29), un canal de distribution (30), un séparateur (31), un système d'étirage (32), une structure portante flexible pour pots de fleurs (33).

2. Architecture florale selon la revendication 1, **caractérisée en ce que** le type modulaire peut facilement et simplement combiner les composants requis, de sorte que la longueur, la largeur et la hauteur s'adaptent aux espaces définis.

3. Architecture florale selon la revendication 1, **caractérisée en ce qu'**elle peut être assemblée et démontée simplement et facilement en composants de base si nécessaire.

4. Architecture florale selon la revendication 1, **caractérisée en ce qu'**elle est réalisée sous forme d'installation florale.

5. Architecture florale selon la revendication 1, **caractérisée en ce qu'**en utilisant des composants, diverses solutions peuvent être créées en fonction des exigences et des projets des architectes pour les bâtiments, les extérieurs et les intérieurs, en installant des canaux de distribution (30), des boîtes de distribution avec couvercles (26), des tuyaux d'évacuation d'eau (27), des tuyaux d'alimentation en eau (28) et une infrastructure spéciale est créée sous les revêtements muraux, tandis que la combinaison du système requis est installée à l'endroit le plus pratique sur ou dans le bâtiment, les ouvertures de fenêtre incorporant les parties des clips qui sont ensuite fixées au porte-pot.

6. Architecture florale selon la revendication 1, **caractérisée en ce que** l'ordinateur gère le système d'arrosage à l'aide d'un logiciel et sur la base de données collectées telles que l'humidité du sol à l'aide d'une sonde, la régulation automatique du début de l'arrosage en fonction des besoins des plantes, collecte des données sur l'intensité de la lumière solaire, la température à laquelle les plantes sont exposées pendant une période de temps prédéfinie, le système de connexion sans fil de l'ordinateur central permet la gestion du système et l'accès aux données collectées et, en cas de vandalisme, de panne du système, ou niveau d'eau baissant en dessous du minimum programmé, le système envoie automatiquement des alertes de notification au ordinateur central.
